# EUROPEAN PATENT APPLICATION

(11) **EP 3 418 546 A1**
(43) Date of publication of application: **26.12.2018**
(21) Application number: 18183881.4
(22) Date of filing: 18.05.2015
(51) Int. Cl.: F02M 21/02, F02D 19/06, F02M 37/00

(54) **RECIRCULATING SYSTEM FOR A FUEL SUPPLY SYSTEM FOR A MOTOR AND METHOD FOR SUPPLYING FUEL TO A MOTOR OF A VEHICLE THROUGH SUCH A SUPPLY SYSTEM**

(30) Priority: 22.05.2014 IT RM20140262
(62) Divisional of application: 15751095.9
(71) Applicant: ICOMET S.R.L, 04012 Cisterna di Latina (LT) (IT)
(72) Inventor: CIPPITANI, Luciano, 04012 CISTERNA DI LATINA (LT) (IT)
(74) Representative: Tiburzi, Andrea

(57) **Abstract**

The invention relates to a method for supplying fuel to a motor of a vehicle by means of a fuel supply system comprising: a first tank (2, 22) for containing a first fuel; a second tank (48, 58) for containing a second fuel; supply means (5, 41) for supplying fuel to the motor; a supply line, for allowing the passage of said first fuel from said first tank (2, 22) to said supply means (5, 41); a supply line (47, 53) for connecting said second tank (48, 58) to said supply line; a return line, for allowing the passage of fuel from said supply means (5, 41) to said first tank (2, 22); a recirculating line (10, 30), connected to said supply line and to said return line, for allowing the passage of fuel from said return line to said supply line; and valve means (9, 12; 45, 46), configured for selectively directing fuel from said return line to said supply line, by said recirculating line (10, 30), or to said first tank (2, 22); wherein said method comprises the step of passing said first fuel from said supply means (5, 41) through a closed circuit comprising a portion of said return line, said recirculating line (10, 30) and a portion of said supply line, allowing the passage of said first fuel through said recirculating line (10, 30), in such a way that said first fuel again reaches said supply means (5, 41), when there is a switching from said first fuel to said second fuel for supplying the motor.

## Description

This invention relates to a recirculating system for a fuel supply system for a motor and method for supplying fuel to a motor of a vehicle through such a system.

The fuel supply method according to the invention can be advantageously used for supplying various fuels, such as, for example, LPG, DME, ammonia and other similar fuels.

The above-mentioned method can be further advantageously used for supplying direct or indirect injection, traditional injection or common rail injection gasoline or diesel motors.

The description below will be addressed to a supply system and to a supply method for a gasoline and LPG motor of a vehicle, but is clearly evident that the same must not be considered limited to the use with these types of specific fuels, as they can also be used with fuels different from those indicated in the following description.

In the vehicles provided with a gasoline or diesel motor supplied with a traditional LPG supply system, in order for the LPG to be always maintained in the liquid state, if not used by the motor, it must necessarily return to the tank to prevent its gasification and this means that, when the vehicle is running, the LPG contained in the tank of the vehicle tends to progressively increase its temperature due to the residual LPG which, from the high pressure tank or from the injector rail of the motor, returns, hot, to the tank.

For example, it should be noted that, after a journey of even only just a few hours, the temperature of the LPG present in the tank of the vehicle could even exceed 70°C.

The increase of the temperature of the LPG in the tank unavoidably means a corresponding increase in pressure, up to pressure values which could even exceed the maximum permitted threshold (20 bar) for delivering LPG by LPG distributors for carrying out supply operations.

Therefore, if the pressure of the LPG in the tank exceeds the above-mentioned threshold, it would be absolutely impossible to supply the LPG.

Currently, the average LPG delivery pressure in LPG stations is usually between 12 bar and 15 bar.

This means that if the pressure of the LPG in the tank of the vehicle exceeds 15 bar, the distributor's pump is unable to transfer the LPG into the tank.

Recently, it has been thought to overcome the above-mentioned problem by means of a temporary switching of the supply to the motor from LPG to gasoline, when an excessive LPG temperature increase occurs, in order to obtain a progressive lowering of the temperature, and therefore of the pressure, of the LPG present in the tank until the motor is supplied with gasoline.

However, in this case the driver of the vehicle would be obliged to make one or more parts of his/her journey powered with gasoline, instead of LPG, as could be preferred in order to reduce fuel costs.

In view of the above, the aim of this invention is to provide a method for supplying fuel to a vehicle motor, which allows refuelling at any time, that is to say, whenever it is necessary.

Another aim of the invention is to provide a method for supplying fuel to a vehicle motor, which allows switching from one fuel to another in a simple and efficient way.

The object of the invention is therefore a method for supplying fuel to a motor of a vehicle by means of a fuel supply system comprising: a first tank for containing a first fuel; a second tank for containing a second fuel; supply means for supplying fuel to the motor; a supply line, for allowing the passage of said first fuel from said first tank to said supply means; a supply line, for connecting said second tank to said supply line; a return line, for allowing the passage of fuel from said supply means to said first tank; a recirculating line, connected to said supply line and to said return line, for allowing the passage of fuel from said return line to said supply line; and valve means, configured for selectively directing fuel from said return line to said supply line, by said recirculating line, or to said first tank; wherein said method comprises the step of passing said first fuel from said supply means through a closed circuit comprising a portion of said return line, said recirculating line and a portion of said supply line, allowing the passage of said first fuel through said recirculating line, in such a way that said first fuel again reaches said supply means, when there is a switching from said first fuel to said second fuel for supplying the motor.

The invention is now described, by way of example and without limiting the scope of the invention, with reference to the accompanying drawings which illustrate preferred embodiments of it, in which:
Figure 1 shows a method scheme for an LPG and gasoline supply system for an indirect injection, common rail motor, according to the invention;
Figure 2 shows a first arrangement of a method scheme for an LPG and gasoline supply system for a direct injection motor, according to the invention; and
Figure 3 shows a second arrangement of a method scheme for an LPG and gasoline supply system for a direct injection motor, according to the invention.

In the various figures similar parts are labelled with the same reference numerals.

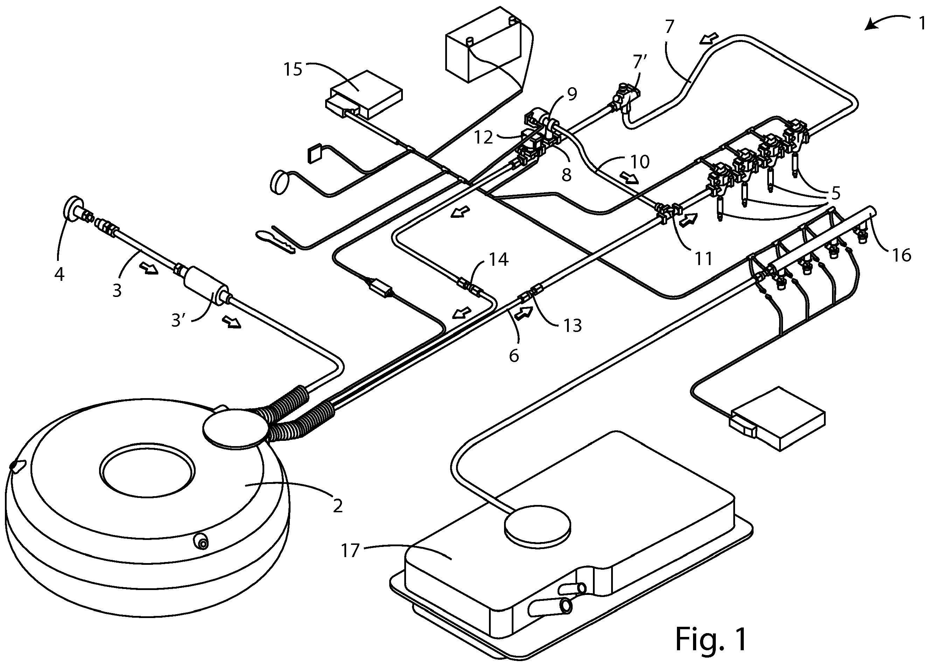

With reference to Figure 1, the numeral 1 denotes a system for supplying LPG and gasoline for an indirect injection common rail motor of a vehicle.

The above-mentioned system 1 comprises a tank for the LPG 2, lined at the bottom with a layer of insulating material, such as, for example, rock wool, for insulating it from the heat of the vehicle's silencer.

On said tank 2 is engaged an intake tube 3, provided with an intake filter 3' and an intake port, that is to say, a nozzle 4, at a relative end, for allowing the refuelling of LPG at any LPG station.

The system 1 further comprises a series of LPG injectors 5 connected to the LPG tank 2 by means of a supply tube 6 and designed to inject LPG into the intake manifold of the vehicle motor.

The LPG tank 2 comprises a drawing pump (not shown) for pushing LPG from said tank 2 to the injectors 5 and a secondary recirculating tube (not shown) which connects the supply tube 6 to the tank 2.

In the tank 2 there is also a safety solenoid valve (not shown) for interrupting the flow of LPG exiting from said tank 2 when the vehicle motor is switched off.

A return tube 7 is provided from the LPG injectors 5 to the tank 2 for allowing the return of the residual LPG (not used by the motor) to the tank 2.

A pressure adjusted 7' is mounted on the return tube 7 for adjusting the pressure in said return tube 7, and a first three-way joint 8 provided with an inlet communicating with the above-mentioned injectors 5, a first exit and a second exit.

A first solenoid valve 9 is mounted on the first exit of the of the first three-way joint 8, with the relative exit connected to the supply tube 6 by means of a recirculating tube 10 and a second three-way joint 11 for connection of the latter on said supply tube 6.

A check valve (not shown) is also installed on the recirculating tube 10, which allows the flow of LPG only from the return tube 7 to the supply tube 6, preventing the flow in the opposite direction.

A second solenoid valve 12 is present on the return tube 7, installed upstream of the first three-way joint 8, in such a way that the inlet and the exit of said second solenoid valve 12 communicate, respectively, with the second exit of said first three-way joint 8 and with the LPG tank 2.

Along the stretch of supply tube 6 between the tank 2 and the second three-way joint 11 and on the stretch of the return tube 7 between the second solenoid valve 12 and the tank 2 there are, respectively, a first removable connection member 13 and a second removable connection member 14, for allowing the separation of the tank 2 from the remaining part of the system 1.

The system 1 comprises, in addition to the original vehicle control unit, a control unit 15 connected, by suitable connection wiring, to the above-mentioned drawing pump, to the solenoid valve of the tank 2, to the injectors 5, to the first solenoid valve 9 and to the second solenoid valve 12 to control and manage the operation.

The above-mentioned control unit 15 is also configured for constantly keeping under control the speed and load of the motor of the vehicle during its running, where the motor load means an index of exploitation of the power of the motor with respect to the nominal power.

The control unit 15 is also connected to the common rail 16 communicating with the gasoline tank 17, for controlling the injection of gasoline to the vehicle motor.

At low motor operating regimes, that is to say when the control unit 15 detects that the vehicle speed is lower than a first threshold value and/or the motor load is lower than a second threshold value, the first solenoid valve 9 remains closed whilst the second solenoid valve 12 is open, so that, after passing from the tank 2 to the injectors 5 through the supply tube 6, the LPG which remains after the combustion (since not used by the motor) is returned from the injectors 5 to the tank 2, through the return tube 7.

The operation at lower regimes described above inevitably determines a progressive increase in temperature, and consequently also of pressure, of the LPG contained in the tank 2, since the hot LPG which remaining from the combustion is passed from the injectors 5 directly to the tank 2.

To prevent the excessive increase of the temperature and pressure of the LPG in the tank 2, which would jeopardise the possibility of refuelling with any LPG station, the control unit 15, when it detects that the speed of the vehicle exceeds the first threshold value and the motor exceeds the second threshold value, provides for the opening of the first solenoid valve 9 and, at the same time, the closing of the second solenoid valve 12, in such a way that the residual LPG from the combustion passes from the injectors 5 no longer to the tank 2, but to the injectors 5 themselves, passing through the stretch of return tube 7 between the injectors 5 and the first three-way joint 8, then through the recirculating tube 10 and, lastly, through the stretch of supply tube 6 between the second three-way joint 11 and the injectors 5.

Opening the first solenoid valve 9 and closing, a the same time, the second solenoid valve 12 thus achieves a continuous recirculation of the liquid LPG through the injectors 5.

In this way, the temperature and pressure values of the LPG present in the tank 2 progressively reduce, due to the fact that the tank 2 no longer receives the hot LPG returning from the injectors.

When the speed of the vehicle falls below the first threshold value and/or the motor load falls below the second threshold value since power is not requested to the motor and the fuel consumptions are low, the control unit 15 again commands closure of the first solenoid valve 9 and the simultaneous opening of the second solenoid valve 12, to prevent gasification of the LPG.

In fact, when the motor returns to operating at low regimes (that is, when the speed of the vehicle returns below the first threshold value and/or the motor load returns below the second threshold value), the LPG must return from the injectors 5 to the tank 2, since, otherwise, the continuous recirculating of the same quantity of residual liquid LPG would result in its degasification and, consequently, the malfunction of the system 1.

As soon as both the set values of sped and motor load are exceeded once again, the control unit 15 commands, again, the recirculation of the LPG, opening the first solenoid valve 9 and closing, simultaneously, the second solenoid valve 12.

The operations of the drawing pump and of the secondary recirculating tube of the tank 2, described above, will also depend on the operational conditions of the system 1, that is, operation with or without recirculation, and on the current request of LPG by the moor of the vehicle.

In fact, when recirculation of LPG is provided in the system 1, the drawing pump delivers from the tank 2 a flow of LPG less than that delivered if the system 1 operates normally, that is to say, without recirculation of LPG.

Thus, the operation of the system 1 is managed by the control unit 15 as described above, on the basis of the set speed and motor load values, to prevent the increase of the temperature and the pressure of the LPG contained in the tank 2.

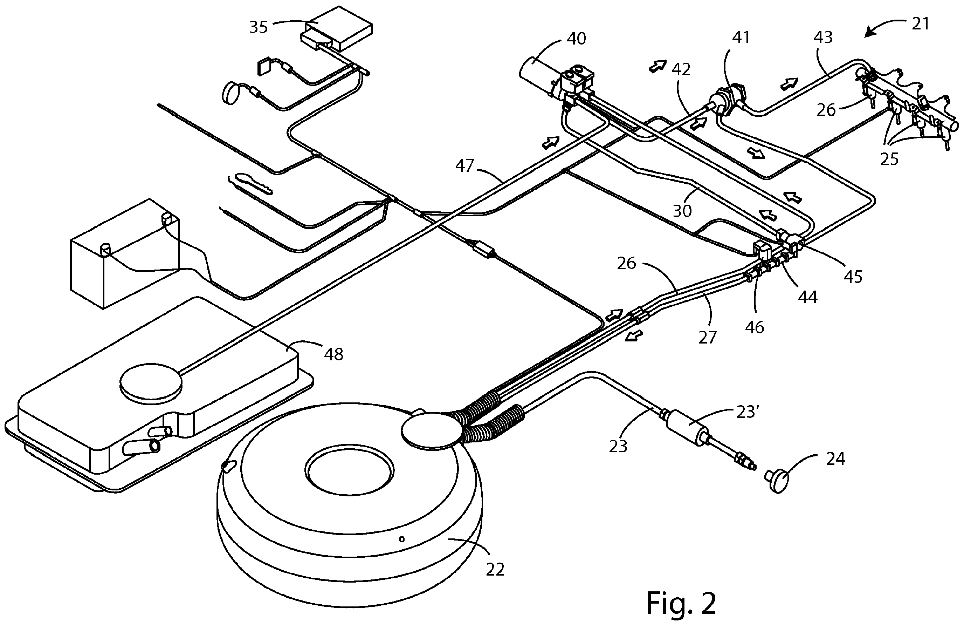

With reference to Figure 2, the numeral 21 denotes a system for supplying LPG and gasoline for a direct injection motor of a vehicle, according to a first arrangement.

Also in this case, the system 21 comprises a tank 22 for the LPG and an intake tube 23 provided with an intake filter 23' and an intake opening, that is, a nozzle 24, connected together as described for the system 1.

The system 21 also comprises a gasoline and LPG dispenser 40, provided with its own pump and connected to the LPG tank 22 by a supply tube 26, and a high pressure pump 41, connected to said dispenser 40 by a first connection tube 42 and to a series of injectors 25, for the direct injection in the combustion chamber, by a second connection tube 43.

The high pressure pump 41 is, in turn, placed in communication with the LPG tank 22 by a return tube 27, on which is joined, by a three-way joint 44, a recirculating tube 30 connected to the dispenser 40 and having a first solenoid valve 45 controlled by the control unit 35.

A check valve (not shown) is installed on the recirculating tube 30, which allows the flow of LPG only from the return tube 27 to the dispenser 40, preventing the flow in the opposite direction.

A second solenoid valve 46 is also installed on the return tube 27, located downstream of the three-way joint 44 and also controlled by the control unit 35.

A supply tube is also connected to the dispenser 40 for the gasoline 47 coming from the gasoline tank 48 to allow the supply of the gasoline to the injectors 25, in the case of operation of the gasoline motor.

The operation of the system for the direct injection motor 21 is substantially the same as that for the system for the common rail motor 1 described above.

In fact, also in this case, when the system 21 is operating under normal conditions, that is, when the motor is operating at low regimes (that is, when the speed of the vehicle is lower than a first threshold value and/or the motor load is lower than a second threshold value), the LPG in excess with respect to the demand of the motor is returned by the high pressure pump 41 directly to the tank 22, through the return tube 27.

When, however, the control unit 35 detects that during operation of the motor both threshold values set for the speed and the motor load have been exceeded (for example, 30 km/h as the speed threshold value and 20% as the motor load threshold value), the LPG is recirculated by the opening of the first solenoid valve 45 and the simultaneous closing of the second solenoid valve 46, until at least one of either the speed of the vehicle or the motor load has not dropped below the relative set threshold value.

Therefore, during the operation with recirculation of LPG, the LPG exiting from the high pressure pump 41 is sent back to the dispenser 40, through the stretch of the return tube 27 between said high pressure pump 41 and the three-way joint 44 and through the above-mentioned recirculating tube 30.

The LPG is then again returned, from the dispenser 40, to the high pressure pump 41, through the above-mentioned first connection tube 42.

A further advantage of the system 21 is due to the fact that, in the case of switching of the supply to the motor from LPG to gasoline, it is possible to obtain the cleaning of the circuit of said system simply by recirculating the LPG by opening the first solenoid valve 45 and simultaneously closing the second solenoid valve 46, without therefore having to send gasoline into the tank 22.

In fact, in the latter case, by recirculating the LPG for supplying the motor, until the complete consumption of the LPG circulating in the portion of the system affected by the recirculation, complete cleaning of this portion of the system is obtained, preparing it, in fact, to receive the new fuel, that is, the gasoline.

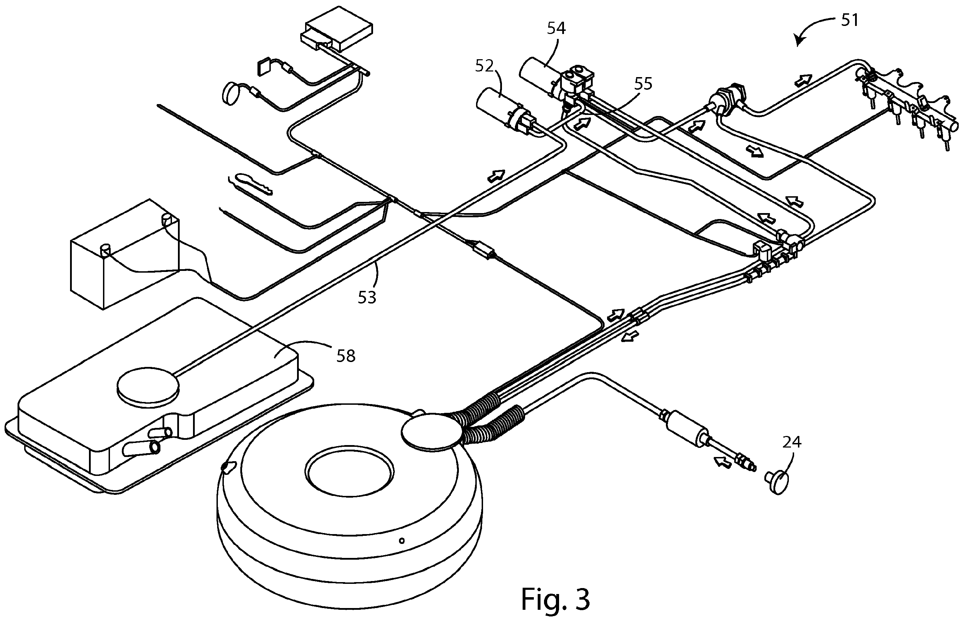

With reference, on the other hand, to Figure 3, the numeral 51 denotes a system for supplying gasoline and LPG for a direct injection motor, according to a second arrangement, which is identical to that illustrated in Figure 2 except that the system 51 further comprises a supplementary pump for the gasoline 52, on which is fitted the gasoline supply tube 53 coming from the gasoline tank 58, and which is connected to the gasoline and LPG dispenser 54 by a further connection tube 55.

In the above-mentioned systems 21, 51 for direct injection motors, the recirculation of the LPG as described above can be advantageously activated during the switching of the supply of the motor from LPG to gasoline, to ensure a correct switching.

In fact, recirculating any LPG still not used by the motor of the vehicle during the above-mentioned switching prevents its gasification, allowing the complete consumption, without creating problems for operation of the systems 21, 51.

With reference to the system 51 for the direct injection motor, the recirculation of the LPG can also be activated during the step for starting the motor according to a particular procedure which comprises a first step, wherein the second solenoid valve 46 is maintained closed for a set period of time whilst the first solenoid valve 45 is maintained simultaneously open during the same period, and a second step, immediately after said first step, wherein the second solenoid valve 46 is opened and the first solenoid valve 45 is closed.

During the starting of the motor, the recirculation of the LPG can be alternately provided according to a different procedure which comprises a first step, wherein the second solenoid valve 46 is maintained closed for a set period of time whilst the first solenoid 45 is maintained simultaneously open during the same period, and a second step, immediately after said first step, comprising alternate opening and closing of the second solenoid valve 46, at 0.5 second time intervals, for a total period of time equal to that of the first step.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A method for supplying fuel for a motor of a vehicle by means of a fuel supply system comprising:
a first tank (2, 22) for containing a first fuel;
a second tank (48, 58) for containing a second fuel;
supply means (5, 41) for supplying fuel to the motor;
a supply line, for allowing the passage of said first fuel from said first tank (2, 22) to said supply means (5, 41);
a conveying line (47, 53) for connecting said second tank (48, 58) to said supply line;
a return line, for allowing the passage of fuel from said supply means (5, 41) to said first tank (2, 22);
a recirculating line (10, 30), connected to said supply line and connected to said return line, for allowing the passage of fuel from said return line to said supply line; and
valve means (9, 12; 45, 46), configured for selectively directing fuel from said return line to said supply line, by means of said recirculating line (10, 30), or to said first tank (2, 22);
wherein said method comprises the step of passing said first fuel from said supply means (5, 41) through a closed circuit comprising a portion of said return line, said recirculating line (10, 30) and a portion of said supply line, allowing the passage of said first fuel through said recirculating line (10, 30), in such a way that said first fuel again reaches said supply means (5, 41), when there is a switching from said first fuel to said second fuel for supplying the motor.
